# EUROPEAN PATENT SPECIFICATION

(11) **EP 3 745 556 B1**
(45) Date of publication and mention of the grant of the patent: **23.02.2022**
(21) Application number: 19177297.9
(22) Date of filing: 29.05.2019
(51) Int. Cl.: H02J 13/00

(54) **A COMPUTER-IMPLEMENTED METHOD FOR WIRELESS COMMUNICATING AT LOCAL LEVEL WITH THE CONTROL NODES OF AN ELECTRIC SYSTEM**
COMPUTERIMPLEMENTIERTES VERFAHREN ZUR DRAHTLOSEN KOMMUNIKATION AUF LOKALER EBENE MIT DEN STEUERKNOTEN EINES ELEKTRISCHEN SYSTEMS
PROCÉDÉ MIS EN OEUVRE PAR ORDINATEUR POUR COMMUNICATION SANS FIL AU NIVEAU LOCAL À L'AIDE DES NOEUDS DE COMMANDE D'UN SYSTÈME ÉLECTRIQUE

(43) Date of publication of application: 02.12.2020
(73) Proprietor: ABB Schweiz AG, 5400 Baden (CH)
(72) Inventor: Tacchini, Claudio, 52028 Terranuova Bracciolini (AR) (IT)
(74) Representative: De Bortoli, Eros

(56) References cited:
- EP-A1- 2 334 138
- US-A1- 2006 171 332

## Description

The present invention relates to a method for wireless communicating at local level with the control nodes of an electric system.

In a further aspect, the present invention relates to a portable computerised device implementing said method.

As is known, electric systems like renewable power generation plants or electric power distribution grids generally include a network of control nodes formed by control devices carrying out protection, diagnostic, monitoring and/or control functionalities.

For example, in a photovoltaic plant, such control nodes are generally formed by control units included in or operatively associated with photovoltaic inverters.

In most recent electric systems, control nodes are normally provided with a wireless communication port and they can generally interact with external portable computerised devices via local wireless communication (e.g. via a WiFi^{™} communication).

Thus, as control nodes are also often interconnected in a wired manner, each control node can operate as a wireless access point to a variously extended LAN or local subnet.

Even if they are capable of fully satisfying the purposes for which they have been designed, currently available control networks for electric systems show some drawbacks.

Nowadays, in order to communicate with control nodes, e.g. for configuration purposes during the commissioning activities of the electric system, an operator has often to interact with one control node at a time by bringing a portable computerised device in the nearby of each control node.

As it is easy to understand, such an approach is remarkably time-consuming and expensive in terms of manpower since electric systems may include a large number (e.g. tens or hundreds) of control nodes.

In addition, the physical topology of the control nodes normally changes from an electric system to another as it basically depends on installation requirements. An operator does not often have a full knowledge of the topology of the control nodes since this information may be unavailable or not updated for any reason.

Therefore, it may be quite difficult to reach some control nodes due to a lack of information on their actual location or due their uncomfortable position. EP 2334138 A1 discloses wireless communication in a local level electric system with a plurality of nodes according to the preamble of claim 1.

In order to mitigate the above issues, an operator may interact in parallel with a plurality of control nodes falling within the wireless communication range of a portable computerised device. However, this approach may cause relevant problems in selecting the control nodes with which an interaction is actually desired, as control nodes may be close one with another.

Thus, also in this case, the actual topology of the control nodes may constitute a relevant time-consuming factor in the interaction process with the control nodes.

In the state of the art, it is quite felt the need for solutions allowing a computerised device portable by an operator to interact with the control nodes of an electric system through a local wireless communication in quicker and less labor-intensive ways, in particular without warring on the physical topology of the control nodes.

In order to respond to this need, the present invention provides a method for wireless communicating at local level with one or more control nodes of an electric system, according to the following claim 1 and the related dependent claims.

In a general definition, the method, according to the invention, comprises the following steps:
a) generating a first list of control nodes including one or more control nodes of interest intended for communication and generating a command to exchange information packets with said control nodes of interest;
b) checking whether a wireless communication at local level can be established with a control node of interest included in said first list of control nodes;
c) if a wireless communication at local level can be established with a control node of interest included in said first list of control nodes, selecting said control node of interest as a reference control node;
d) executing a first path-finder procedure through said reference control node to discover possible control nodes interconnected, in a wired manner, with said reference control node and generating a second list of control nodes including said reference control node and possible control nodes interconnected, in a wired manner, with said reference control node;
e) selecting possible undiscovered control nodes of interest included in said second list of control nodes and exchanging said information packets with the selected undiscovered control nodes of interest;
f) checking whether there are still undiscovered control nodes of interest in said first list of control nodes;
g) if there are no undiscovered control nodes of interest in said first list of control nodes, terminate said method;
h) if a local wireless communication cannot be established with any control node of interest of said first list of control nodes at the step b) of said method or if there are undiscovered control nodes of interest in said first list of control nodes, executing a second path-finder procedure to generate a third list of control nodes located within a local wireless communication range;
i) carrying out a determination procedure to check whether a control node of said third list of control nodes is selectable as a reference control node;
j) if a control node of said third list of control nodes is selectable as a reference control node, repeating the previous steps by starting from step d) and by selecting said selectable control node as a reference control node; or
k) if no control node of said third list of control nodes is selectable as a reference control node, terminate said method.

Preferably, said determination procedure comprises the following steps:
i.1) checking whether there are undiscovered control nodes of interest included in said third list of control nodes;
i.2) if there are undiscovered control nodes of interest included in said third list of control nodes, checking whether a wireless communication channel can be established with an undiscovered control node of interest included in said third list;
i.3) if a wireless communication channel can be established with an undiscovered control node of interest included in said third list of control nodes, determining that said undiscovered control node of interest is selectable as a reference control node;
i.4) if there are no undiscovered control nodes of interest included in said third list of control nodes or if a wireless communication channel cannot be established with any undiscovered control node of interest included in said third list of control nodes, checking whether a wireless communication channel can be established with any control node included in said third list of control nodes;
i.5) if a wireless communication channel can be established with a control node included in said third list of control nodes, determining that said control node is selectable as a reference control node);
i.6) if a wireless communication channel cannot be established with any control node included in said third list of control nodes, determining that no control node included in said third list of control nodes is selectable as a reference control node.

Preferably, said first path-finder procedure includes executing a wired network discovery algorithm (e.g. of the DNS-SD type) through said reference control node.

Preferably, the step e) of the method, according to the invention, includes exchanging said information packets with possible undiscovered control nodes of interest in a parallel manner. Preferably, the step e) of the method, according to the invention, includes exchanging said information packets with possible undiscovered control nodes of interest in a sequential manner. Preferably, said second path-finder procedure includes executing a wireless network scanning algorithm (e.g. of the WiFi^{™} type).

Preferably, the termination of said method includes providing output data indicative of execution results of said method.

Preferably, the method, according to the invention, comprises a step of updating a map of the control nodes of said electric system.

Preferably, said electric system is a photovoltaic plant, each control node being included in or operatively associated with a photovoltaic inverter of said photovoltaic plant.

In a further aspect, the present invention relates to a computer program, according to the following claim 10.

In a further aspect, the present invention relates to a portable computerised device, according to the following claim 11.

Characteristics and advantages of the invention will emerge from the description of preferred, but not exclusive embodiments of the method, according to the invention, non-limiting examples of which are provided in the attached drawings, wherein:
- Figure 1 is schematic example showing an electric system, e.g. a photovoltaic plant;
- Figure 2 is a schematic view of a control node of an electric system;
- Figure 3 is a schematic view of a portable computerised device implementing the method, according to the invention;
- Figures 4-5 schematically show the steps of the method, according to the invention;
- Figures 6-9 schematically show an implementation example of the method, according to the invention.

With reference to the cited figures, the present invention relates to a method 100 for wireless communicating at local level with one or more control nodes of an electric system.

For the purposes of the present invention, the term "wireless communicating at local level" is mainly referred to wireless communication processes carried out by employing known wireless local networking protocols, such as WiFi^{™}, Bluetooth^{™}, Zigbee^{™}, and the like.

In addition, the term "wireless communication" should be intended in general terms, i.e. referring to unidirectional or bidirectional wireless transmission of information packets PCK. Information packets PCK may include single commands, ordered or non-ordered sequences of commands, data such as configuration data or monitoring data, single messages, ordered or non-ordered sequences of messages, and the like.

Information packets PCK are preferably predefined and stored in suitable memory locations of one or more control nodes of the electric system and/or of a computerised device 50 interacting with said control nodes and implementing the method 100.

The method 100, according to the present invention, is particularly adapted for implementation in photovoltaic plants and it will be here described with particular reference to this application field for the sake of brevity only, without intending to limit in any way the scope of the invention. The method 100 of the invention may, in fact, be conveniently employed in electric systems of different type, e.g. in wind farms or other distributed power generation plants or in electric power distribution grids.

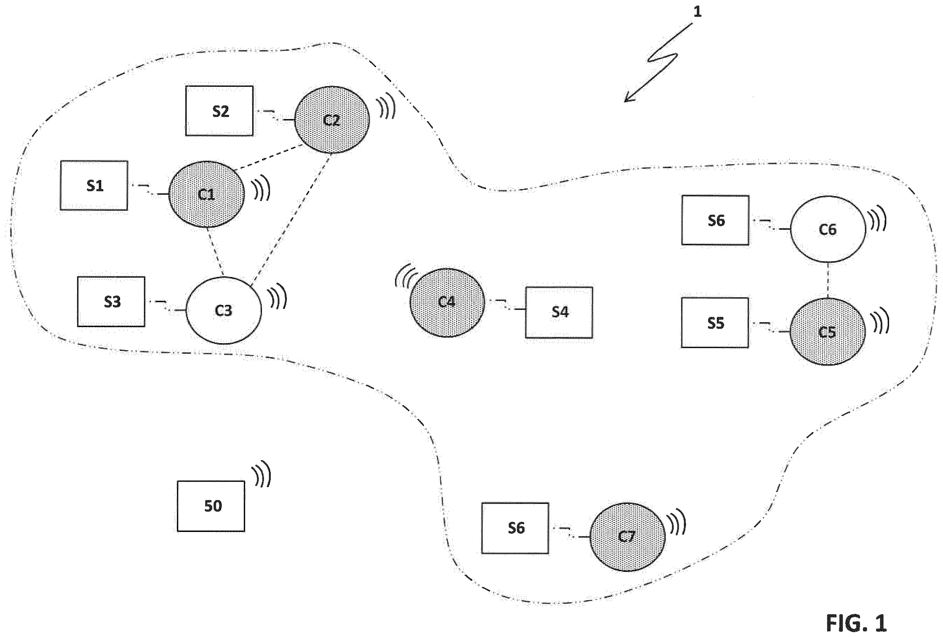

Figure 1 schematically shows an electric system 1, for example a photovoltaic plant.

The electric system 1 comprises a plurality of primary apparatuses S1, S2, S3, S4, S5, S6, S7, for example photovoltaic inverters operatively coupled with corresponding photovoltaic panels or strings (not shown).

Each primary apparatus conveniently includes or is operatively associated with a corresponding control unit C1, C2, C3, C4, C5, C6, C7 adapted to control its functionalities.

Control units C1-C7 form a network of control nodes of the electric system.

Depending on the installation requirements, control nodes C1-C7 are arranged according to a certain physical topology.

Referring to the example of figure 1, some control nodes, such as the control node C4, may be isolated from other control nodes and, at the same time, arranged near other control nodes. Some control nodes, such as the control nodes C1-C3, may be interconnected one with another in a wired manner (thereby forming a LAN or a subnet) and arranged near other control nodes. Some control nodes, such as the control nodes C5-C6, may be interconnected one with another in a wired manner and arranged far from other control nodes.

Some control nodes, such as the control node C7, may be isolated from other control nodes and arranged far from other control nodes.

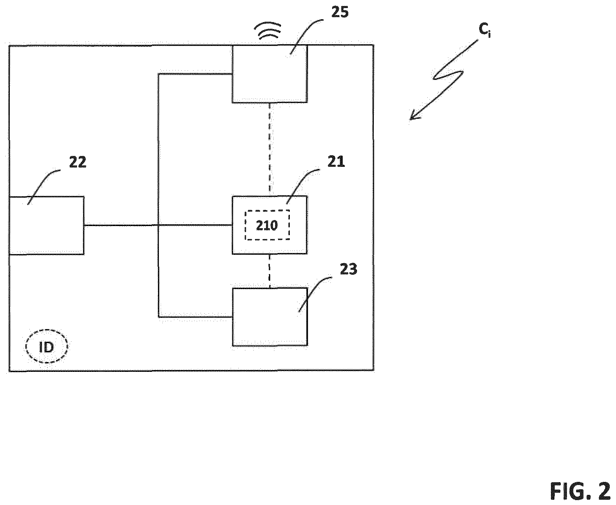

The skilled person will certainly understand that other topology configurations different from those of figure 1 are possible, according to the needs. However, the exemplary operative arrangements shown in figure 1 are normally present in extended networks of control nodes. Figure 2 schematically shows a generic control node Cᵢ (i=1, ..., 7) of the electric system 1 shown in figure 1.

The control node Cᵢ, which may be, for example, the control unit of a photovoltaic inverter of a photovoltaic plant, comprises a control module 21, a memory 23 and a power supply module 22 (which may be of known type).

Advantageously, the control module 21 is equipped with suitable data processing resources 210 (e.g. a microprocessor, a digital processing device or the like) capable of executing suitable software instructions stored in the memory 23 to carry out the functionalities foreseen for the corresponding control node Cᵢ.

An important aspect of each generic control node Cᵢ consists in that it is equipped with a wireless communication module 25 (which may be of known type) operatively associated to and interacting with the control module 21.

In operation, the wireless communication module 25 is capable of employing known wireless local networking protocols for communication. In this way, the control node Cᵢ is capable of wireless communicating at local level with an external computerised device. Each generic control node Cᵢ is thus capable of operating as a wireless access point for an external computerised device.

The access to a generic control node Cᵢ by an external computerised device may occur in a manner known to the skilled person. For example, an external computerised device can access to a generic control node Cᵢ by providing a suitable password to this latter.

Conveniently, a generic control node Cᵢ stores, in a memory location, information packets PCK to be exchanged with an external computerised device, if information is transmitted from said control node to said computerised device.

A further important aspect of each generic control node Cᵢ consists in that it is univocally identified by a suitable identification code ID that is known and stored since when the control node itself is installed.

The method 100, according to the invention, is particularly suitable for being computer-implemented by means of a portable computerised device 50.

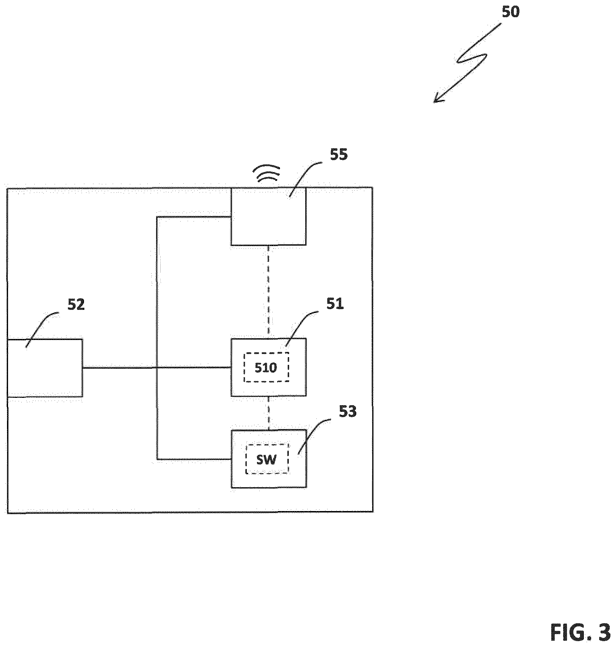

Figure 3 schematically shows a generic portable computerised device 50, for example a tablet, a portable computer, a smartphone, and the like, suitable for implementing the method 100.

The computerised device comprises a control module 51, a memory 53 and a power supply module 52, which may be of known type.

Advantageously, the control module 51 is equipped with suitable data processing resources 510 (e.g. a microprocessor, a digital processing device or the like) capable of executing suitable software instructions to carry out the functionalities foreseen for the computerised device 50.

In particular, the control module 51 is equipped with data processing resources capable of carrying out software instructions SW stored in a memory location to carry out the method 100, according to the invention.

The computerised device 50 is equipped with a wireless communication module 55 (which may be of known type) operatively associated to and interacting with the control module 21.

In operation, the wireless communication module 55 is capable of employing known wireless local networking protocols for communication. In this way, the computerised device 50 is capable of wireless communicating at local level with a generic control node Cᵢ of the electric system.

Conveniently, the portable computerised device 50 stores, in a memory location, information packets PCK to be exchanged with one or more control nodes of the electric system, if information is transmitted from said portable computerised device to said control nodes.

In order to ensure a suitable implementation of the method 100, the computerised device 50 conveniently stores in suitable memory locations the identification numbers ID of the control nodes of the electric system and other security information (e.g. logins, passwords, and the like) required by each control node Cᵢ of the electric system for wireless communicating at local level with it.

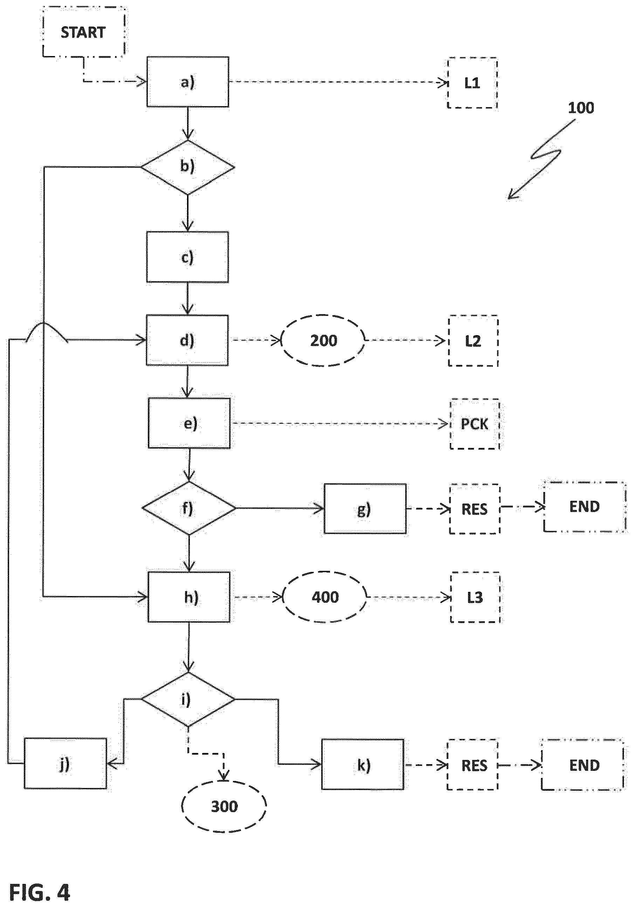

The steps of the method 100 will be now described in details with reference to the figures 4-5. For the sake of clarity, some additional terms used to describe the method 100, according to the invention, are here defined in more details.

For the purposes of the invention, the term "undiscovered control nodes of interest" identifies the nodes of interest (included in the first list L1 of control nodes), which have not been already discovered by means of suitable path-finder procedures 200 and 400, at a given execution stage of the method 100.

For the purposes of the invention, the term "discovered control nodes of interest" identifies the nodes of interest (included in the first list L1 of control nodes), which have already been discovered by means of the above-mentioned path-finder procedures 200 and 400, at a given execution stage of the method 100.

Obviously, at an initial stage of the method 100, all nodes of interest included in the first list L1 of control nodes will be "undiscovered control nodes of interest" by definition.

On the other hand, at a final stage of the method 100, all or many nodes of interest included in the first list L1 of control nodes will be "discovered control nodes of interest" (it may happen that some nodes of interest are not found at all).

For the purposes of the invention, the term "reference control node" identifies a node of interest that should represent a starting node (pivot node) for carrying out a path-finder procedure, in particular the path-finder procedure 200 described in the following.

For the purposes of the invention, the term "control nodes of interest" identifies the control nodes of the electric system, with which a wireless communication is intended to be carried out at a given execution session of the method 100.

The method 100 is basically directed to wireless communicate at local level with one or more control nodes of interest of an electric system.

The method 100 comprises an initial step a) that includes generating a first list L1 of control nodes including control nodes of interest intended for communication.

In general, for an electric system including N (positive integer number) control nodes, the above-mentioned first list L1 of control nodes will include K (positive integer number) control nodes of interest, with K<=N.

Referring to the exemplary electric system of figure 1, the control nodes of interest included in the first list L1 of control nodes will be, for example, the control nodes C1, C2, C4, C5 and C7 (highlighted in grey colour).

The generation process of the first list L1 of control nodes may be responsive to suitable inputs provided by user through a suitable graphic user interface or buttons made available by the portable computerised device 50.

The selection of the control nodes of interest is conveniently carried out basing on the identification numbers ID of the control nodes of the electric system, which are advantageously stored in a memory location of the portable computerised device 50.

The step a) of the method 100 further includes generating a command to exchange predefined one or more information packets PCK with the control nodes of interest included in the first list L1. Conveniently, the command generated at the step a) triggers the execution of the remaining steps of the method 100.

Some steps of the method 100, such as the following steps d) and h) are basically directed to progressively reconstruct the actual topology of the above-mentioned control nodes of interest (and possibly of other control nodes) through the recursive execution of suitable path-finder procedures 200 and 400.

Other steps of the method 100, such as the following step e), are instead directed to complete the exchange of information packets PCK for the control nodes of interest progressively discovered in the above-mentioned reconstruction process and, at the same time, to avoid undesired redundancies in the information exchange process.

Following the above mentioned step a), the method 100 includes some preliminary steps b) and c), in which a generic control node of interest of the electric system is approached. These preliminary steps are conveniently prodromal to a following cyclic execution of sequences of steps involving the above-mentioned path-finder procedures 200 and 400 and the above-mentioned the exchange of information packets PCK with the control nodes of interest progressively discovered by said path-finder procedures.

Following the above mentioned step a), the method 100 thus includes the step b) of checking whether a wireless communication at local level can be established with a control node of interest included in said first list L1 of control nodes.

A control node of interest of the first list L1 can be selected in response to suitable inputs provided by the operator through a suitable graphic user interface or buttons.

As an alternatively, a control node of interest may be selected in order of list or randomly or basing on the intensity of the wireless signal provided by the communication module of said control node.

In order to establish a communication channel with a given control node of interest of the first list L1 of control nodes, the portable computerised device 50 can start negotiating with this latter according to the modalities foreseen by the employed wireless communication protocol and, conveniently, by providing the corresponding password stored in a memory location of the portable computerised device 50.

If this process of establishing a communication channel fails for a given control node of interest of the first list L1 of control nodes, a new control node of interest is selected and checked until ending the first list L1 of control nodes.

If a wireless communication at local level cannot be established with any given control node of interest included in the first list L1 of control nodes, the method 100 provides for directly executing the following step h), which will be better described later on.

If a wireless communication at local level can be established with a given control node of interest included in the first list L1 of control nodes, the method 100 provides the step c) of selecting said given control node of interest as a reference control node.

Following the above-mentioned step c), the method 100 comprises a step d) that includes executing a first path-finder procedure 200 to discover possible control nodes interconnected, in a wired manner, with said reference control node.

Referring to the exemplary electric system of figure 1, supposing that the control node C1 (which is a control node of interest) has been selected as a reference control node, the control nodes included in the second list L2 of control nodes will include, for example, the control nodes C2 and C3 that are interconnected with the control node C1 in a wired manner.

Preferably, the first path-finder procedure 200 includes executing a suitable wired network discovery algorithm (e.g. a known DNS-SD algorithm) through the above-mentioned reference control node.

The step d) of the method 100 further includes generating a second list L2 of control nodes including the above-mentioned reference control node and other possible control nodes interconnected, in a wired manner, with said reference control node, which have been discovered by executing the first path-finder procedure 200.

In general, the second list L2 of control nodes may include, in addition to the above-mentioned reference control node, control nodes of interest and/or control nodes not being control nodes of interest.

In general, if the second list L2 of control nodes includes some control nodes of interest, these latter may be undiscovered control nodes of interest and/or discovered control nodes of interest. Additionally, the above-mentioned reference control node may be an undiscovered control node of interest or a discovered control node of interest.

Obviously, if the path-finder procedure is carried out for the first time, the above-mentioned reference control node will necessary be an undiscovered control node of interest.

According to the invention, the method 100 comprises a step e) that includes selecting possible undiscovered control nodes of interest included in the second list L2 of control nodes and exchanging information packets PCK with the selected undiscovered control nodes of interest. The step e) of the method 100 is basically directed to complete the exchange of information packets PCK for the control nodes of interest identified at the previous step d), which have not already been discovered yet.

In this way, undesired redundancies of the information exchange process with the control nodes of the electric system are conveniently prevented.

As an example, if the method 100 is carried out with the aim of configuring some control nodes of the electric system, this solution ensures that each control node of interest receives the configuration data only once, even if it has been retrieved many times during the execution of the method itself, e.g. due to the fact that is arranged in proximity of other control nodes of the electric system or it is interconnected with said control nodes.

The exchange of information packets PCK with the possible undiscovered control nodes may occur according to solutions of known type.

According to a possible solution, the step e) of the method 100 may include exchanging the information packets PCK with the undiscovered control nodes of interest in a parallel manner, e.g. according to suitable multi-casting communication algorithms of known type.

According to an alternative approach, the step e) of the method 100 may include exchanging the information packets PCK with the undiscovered control nodes of interest in a sequential manner, e.g. by exchanging information with a single undiscovered control node (e.g. the reference control node), which in turn operates a receiver or transmitter of information with the remaining undiscovered control nodes.

In general, when the step e) is executed for the first time, undiscovered control nodes of interest are always found.

However, at following interaction cycles of the method 100, undiscovered control nodes of interest may not be present in the second list L2 of control nodes.

In this case, the above-mentioned information exchange process included in the step e) of the method 100 is merely skipped and the following steps of the method 100 are carried out. According to the invention, following the above-mentioned step e), the method 100 comprises the step f) checking whether there are undiscovered control nodes of interest in the above-mentioned first list L1 of control nodes.

The step f) is basically directed to check whether all the control nodes of interest included in the list L1 have been discovered.

Obviously, at initial cycles of the method 100, the step f) is somehow trivial as the first list L1 of control nodes generally comprises a huge number of control nodes.

However, its execution is nevertheless important as it provides for checking whether certain conditions for terminating the method 100 are present.

Following the step f), the method 100 includes the step g) of terminating said method, if no more undiscovered control nodes of interest are present in the mentioned first list L1 of control nodes. Preferably, said termination step includes providing output data RES indicative of execution results of said method.

Conveniently, output data RES include information indicative of whether all information exchanges with the progressively discovered control nodes of interest have been successful or the communication processed did not have a successful outcome for some control nodes.

Of course, additional information, such as reports or statistics related to the execution of the method 100, may be included in the output data RES as well.

Following the step f), the method 100 includes the step h) of executing a second path-finder procedure 400 to obtain a third list L3 of control nodes located within a local wireless communication range of the portable computerised device 50.

Conveniently, the step h) of the method 100 is carried out if there are undiscovered control nodes of interest in the first list L1 of control nodes, upon the check carried out at the above-mentioned step f) of the method 100.

As mentioned above, the step h) of the method 100 may also be carried out, if a local wireless communication cannot be established with a control node of interest of the first list L1 of control nodes at the initial step b) of the method 100.

Preferably, the second path-finder procedure 400 includes executing a suitable wireless network scanning algorithm (which may be a known WiFi^{™} scanning algorithm) at one or more locations of the electric system.

In general, the above-mentioned third list L3 of control nodes may include control nodes of interest and/or control nodes not being control nodes of interest or even no control nodes, if the above-mentioned second path-finder procedure 400 does not allow to discover any control node.

Obtaining of above-mentioned third list L3 of control nodes is anyway important as it allows checking whether certain conditions for terminating the method 100 are present by means of a suitable determination procedure 300. The method 100 is terminated if no control node of the third list L3 of control nodes may be selected as reference control node. Otherwise, the above-mentioned steps d)-h) are repeated taking a control node of the third list L3 as new reference control node.

Following the above-mentioned step h), the method 100 includes the step i) of carrying out a determination procedure 300 to check whether a control node of the third list L3 of control nodes is selectable as a reference control node.

If a control node of the third list L3 of control nodes is selectable as a reference control node, the method 100 includes the step j) of repeating the previous steps of the method 100 by starting from the above-mentioned step d) and by using the checked selectable control node of the third list L3 as reference control node.

Otherwise, if no control node of the third list L3 of control nodes is selectable as a reference control node, the method 100 includes the step k) of terminating said method.

Also in this case, the termination of the method 100 preferably includes providing output data RES indicative of execution results of said method.

As mentioned above, output data RES include information indicative of the outcome of the information exchanged with the found control node of interest and, possibly, additional information, such as reports or statistics related to the execution of the method 100.

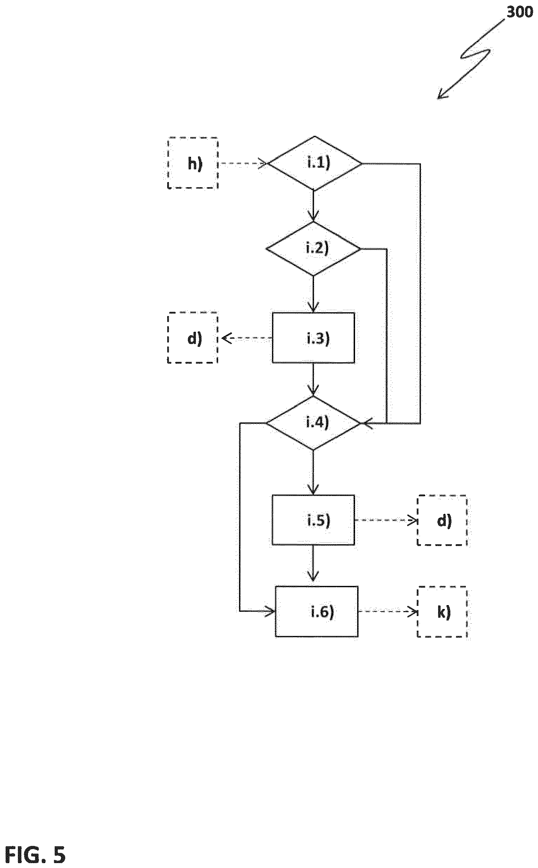

Preferably, the determination procedure 300 is articulated in a sequence of steps i.1)-i.6) that provides for implementing subsequent differentiated checking levels to determine whether a control node of the third list L3 of control nodes is selectable as a (new) reference control node. Referring now to figure 5, the determination procedure 300 is now illustrated in more details.

Preferably, the determination procedure 300 comprises an initial step i.1) of checking whether there are undiscovered control nodes of interest included in the third list L3 of control nodes.

In practice, the step i.1) provides for checking whether the third list L3 of control nodes includes some control nodes (included in the first list L1 of control nodes) that have not already been found by means of the above-mentioned path-finder procedures 200 and 400, at this execution stage of the method 100.

If there are one or more undiscovered control nodes of interest included in the third list L3 of control nodes, the determination procedure 300 comprises a step i.2) of checking whether a wireless communication channel can be established with an undiscovered control node of interest included in the third list L3.

An undiscovered control node of interest to be checked at the step i.2) can be selected in response to suitable inputs provided by the operator through a suitable graphic user interface or button.

As an alternative, an undiscovered control node of interest to be checked may be selected in order of list or randomly or basing on the intensity of the wireless signal provided by said control node. In order to establish a communication channel with a given undiscovered control node of interest of the third list L3 of control nodes, the portable computerised device 50 can start negotiating with said control node according to the modalities foreseen by the employed wireless communication protocol, for example by providing the corresponding password.

If this process of establishing a communication channels fails for a given undiscovered control node of interest of the third list L3 of control nodes, a new undiscovered control node of interest may be selected until ending the third list L3 of control nodes.

If a wireless communication channel can be established with an undiscovered control node of interest included in the third list L3 of control nodes, the determination procedure 300 comprises a step i.3) of selecting said undiscovered control node of interest as a reference control node. In this case, the above-mentioned steps d)-h) will be repeated taking the selected undiscovered control node of the third list L3 as new reference control node according to the above-mentioned step j) of the method 100.

If the above-mentioned checking steps i.1) or i.2) fail, i.e. if there are no undiscovered control nodes of interest included in the third list L3 of control nodes or if a wireless communication channel cannot be established with any undiscovered control node of interest included in the third list L3 of control nodes, the determination procedure 300 comprises a step i.4) of checking whether there a wireless communication channel can be established with any control node included in the third list L3 of control nodes.

The step i.4) is basically directed to check whether there are any available control nodes in the third list L3 of control nodes, with which a communication can be established. The control nodes checked at the step i.4) cannot be undiscovered control nodes of interest. However, they may be discovered control nodes of interest (included in the first list L1 of control nodes) or even control nodes not included in the first list L1 of control nodes.

Basically, the above-mentioned step i.4) of the determination procedure 300 can be carried in a known manner similar to that one illustrated for the above-mentioned step i.3) of the determination procedure 300.

If a wireless communication channel can be established with a control node included in the third list L3 of control nodes, the determination procedure 300 comprises a step i.5) of determining that said control node is selectable as a reference control node. In this case, the above-mentioned steps d)-h) will be repeated taking the selected control node of the third list L3 as new reference control node, according to the above-mentioned step j) of the method 100.

As it may be easily understood, the above-mentioned steps i.4)-i.5) of the determination procedure 300 represent a sort of final attempt of finding a generic control node of the electric system, which might be interconnected with an undiscovered control node of interest and which might allow finding such an undiscovered control node of interest by executing the above-mentioned first path-finder procedure 200.

If also the checking step i.4) fails, i.e. if a wireless communication channel cannot be established with any control node included in the third list L3 of control nodes, the determination procedure 300 comprises a step i.6) of determining that no control node of the third list L3 of control nodes is selectable as a reference control node. In this case, the method 100 is terminated, according to the above-mentioned step k) of the method 100.

As it may be easily understood from the above, the method 100 may include multiple repetition cycles of the above-described steps d)-f) and h)-j).

At each repetition cycle, the actual topology of the above-mentioned control nodes of interest (and possibly of other control nodes) is progressively reconstructed by means of path-finder procedures of different types (i.e. using wired-implemented or wireless-implemented discovery algorithms) and the exchange of information packets PCK with the control nodes of interest is progressively completed, without undesired redundancies in the information exchange process.

Preferably, the method 100 comprises a step (not shown in figure 4) of updating a map M of the control nodes of the electric system.

Conveniently, such an updating step may be carried out following the execution of the above-mentioned path-finder procedures 200 and/or 400.

Conveniently, the map M, which is basically aimed at reconstructing the topology of the control nodes of the electric system, is stored by the portable computerised device 50 in such a way to be used and possibly updated at following execution sessions of the method itself.

### EXAMPLE

A simplified example of implementation of the method 1 is now illustrated with reference to the network of control nodes C1-C7 in the exemplary electric system shown in figure 1.

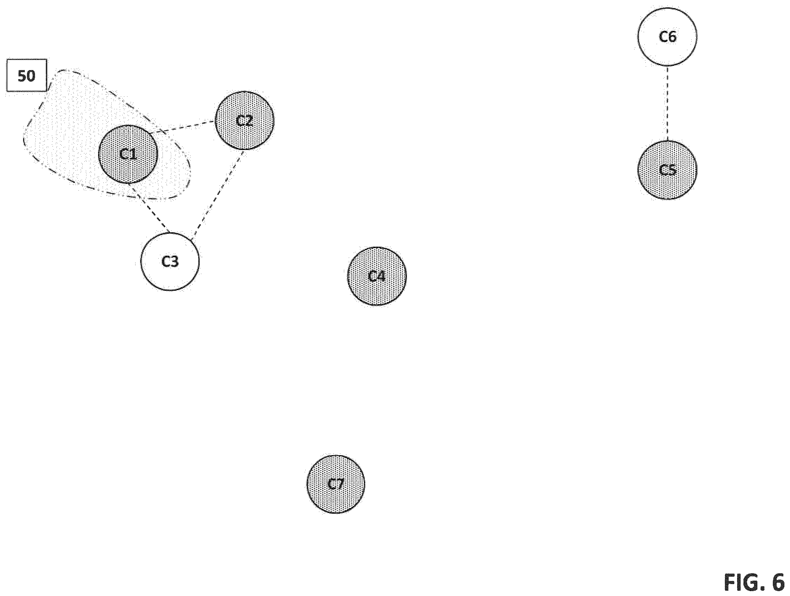

Referring to figure 6, according to the step a) of the method 100, a first list L1 of control nodes including the control nodes of interest for communication purposes (highlighted in grey in figures 1, 4) is generated.

In this case, the first list L1 of control nodes includes the control nodes C1, C2, C4, C5, C7. According to the step b) of the method 100, it is determined that a communication is established with the control node C1, which is thus selected as reference control node according to step c) of the method 100.

According to the step d) of the method 100, a first path-finder procedure 200 is executed through the reference control node C1 and the second list L2 of control nodes is generated.

In this case, the second list L2 of control nodes includes the control nodes C1, C2, C3.

According to the step e) of the method 100, the control nodes C1, C2 are selected as undiscovered control nodes of interest included in the second list L2 of control nodes. Information packets PCK are thus exchanged with the selected undiscovered control nodes of interest C1, C2.

According to the step f) of the method 100, it is then checked whether there are still undiscovered control nodes of interest in the first list L1 of control nodes. In this case, the first list L1 of control nodes still includes the undiscovered control nodes of interest C4, C5, C7.

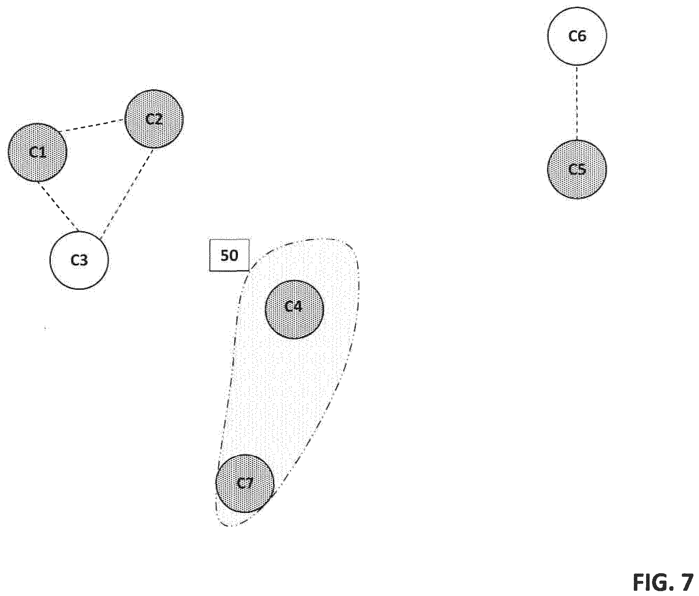

Conveniently, the portable computerised device 50 is moved through the electric system and, according to the step h) of the method 100, a second path-finder procedure 400 is executed (figure 7). A third list L3 of control nodes located within a local wireless communication range is thus generated. In this case, the third list L3 of control nodes includes the control nodes C4, C7.

According to the step i) of the method 100, the determination procedure 300 is carried out to check whether a control node of the third list L3 of control nodes is selectable as a reference control node.

It is supposed that a communication can be established with the control node C4 only, as this latter is closer to the portable computerised device.

The control node C4 is thus determined as selectable for being a new reference control node, according to steps i.1)-i.3) of the determination procedure 100.

According to the step j) of the method 100, the previous steps are repeated by starting from step d) and by selecting the selectable control node C4 as a new reference control node.

According to the step d) of the method 100, the first path-finder procedure 200 is executed through the new reference control node C4 and a new second list L2 of control nodes is generated. In this case, the second list L2 of control nodes includes the sole control node C4. According to the step e) of the method 100, the control node C4 is selected as undiscovered control node of interest included in the new second list L2 of control nodes. Information packets PCK are thus exchanged with the selected undiscovered control nodes of interest C4. According to the step f) of the method 100, it is then checked whether there are still undiscovered control nodes of interest in the first list L1 of control nodes. In this case, the first list L1 of control nodes still includes the undiscovered control nodes of interest C5, C7.

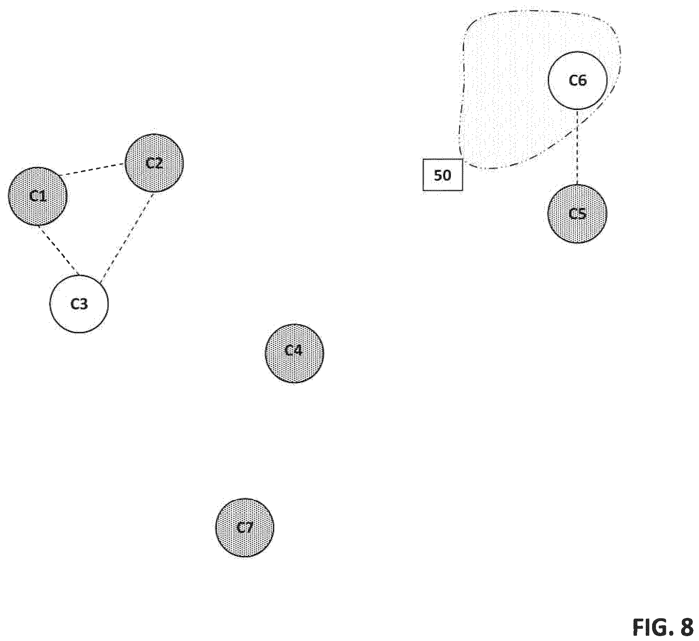

Conveniently, the portable computerised device 50 is moved through the electric system and, according to the step h) of the method 100, the second path-finder procedure 400 is executed (figure 8).

A new third list L3 of control nodes located within a local wireless communication range is thus generated. In this case, the new third list L3 of control nodes includes the sole control node C6, which is not a control node of interest.

According to the step i) of the method 100, the determination procedure 300 is carried out to check whether the control node C6 of the third list L3 of control nodes is selectable as a reference control node.

It is supposed that a communication can be established with the control node C6. Such a control node with thus be determined as selectable for being a new reference control node, according to steps i.4)-i.5) of the determination procedure 100.

According to the step j) of the method 100, the previous steps are repeated by starting from step d) and by selecting the selectable control node C6 as a new reference control node.

According to the step d) of the method 100, the first path-finder procedure 200 is executed through the new reference control node C6 and a new second list L2 of control nodes is generated. In this case, the second list L2 of control nodes includes the control node C6 and the undiscovered control node of interest C5, which is interconnected with the control node C6.

According to the step e) of the method 100, the control node C5 is selected as undiscovered control node of interest included in the new second list L2 of control nodes (whereas the reference control node C6 is not considered as not being a control node of interest). Information packets PCK are thus exchanged with the selected undiscovered control nodes of interest C5. According to the step f) of the method 100, it is then checked whether there are still undiscovered control nodes of interest in the first list L1 of control nodes. In this case, the first list L1 of control nodes still includes the undiscovered control node of interest C7.

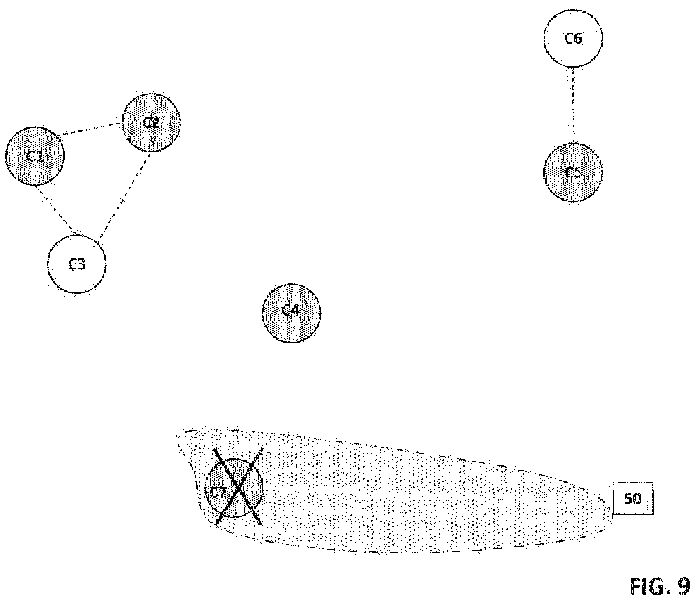

Conveniently, the portable computerised device 50 is moved through the electric system and, according to the step h) of the method 100, the second path-finder procedure 400 is executed (figure 9).

A new third list L3 of control nodes located within a local wireless communication range is thus generated. In this case, the new third list L3 of control nodes includes the sole control node C7, which is an undiscovered control node of interest.

According to the step i) of the method 100, the determination procedure 300 is carried out to check whether the control node C7 of the third list L3 of control nodes is selectable as a reference control node.

It is supposed that a communication cannot be established with the control node C7 due to its isolated position.

As it is additionally impossible to establish a wireless communication with another control node of the third list L3 of control nodes (as only the control node C7 is included therein), it is determined that no selectable control nodes are present in the third list L3.

According to the step k), the method 100 is terminated.

Output data RES will report that the exchange of information packets PCK was successful for the control nodes C1, C2, C4, C5 and failed for the control node C7.

An updated map M of the topology of the control nodes C1-C7 is conveniently stored in the computerised portable device 50 following the above-illustrated execution session of the method 100.

As the skilled person will certainly understand, additional examples of implementation of the method are possible, according to the needs.

The method 100, according to the invention, provides relevant advantages with respect to known solutions of the state of the art.

The method 100 allows interacting with multiple control nodes of an electric system in a simple and direct manner, even without having a detailed knowledge of the actual topology of said control nodes.

In order to complete transmission/reception of information packets CKP to/from said control nodes, a user has merely to walk through an electric system with the portable computerised device 50 implementing the method 100.

The method 100 allows obtaining a dramatic reduction of time necessary for carrying out an information exchange process with the control nodes of the electric system. This entails remarkable savings in terms of manpower costs, for example during maintenance interventions or commissioning activities of the electric system.

As communication may occur with multiple control nodes at a time, the method 100 further allows reducing the power consumed by the control nodes of the electric system for carrying out an information exchange process, e.g. for being configured during commissioning activities of the electric system.

The method, according to the present invention, is particularly adapted to be implemented by a portable computerised device without the need of specific hardware resources.

The method, according to the invention, is particularly adapted for being implemented in digitally enabled power distribution networks (smart grids, micro-grids and the like) and renewable power generation plants, in particular photovoltaic plants.

## Claims

1. A method (1) for wireless communicating at local level with one or more control nodes of an electric system, said control nodes being included in or operatively associated with corresponding electric or electronic apparatuses of said electric system and being capable of communicating at local level with a computerised device (50), **characterised in that** it comprises the following steps:
a) generating a first list (L1) of control nodes including control nodes of interest intended for communication and generating a command to exchange information packets (PCK) with said control nodes of interest;
b) checking whether a wireless communication at local level can be established with a control node of interest included in said first list (L1) of control nodes;
c) if a wireless communication at local level can be established with a control node of interest included in said first list (L1) of control nodes, selecting said control node of interest as a reference control node;
d) executing a first path-finder procedure (200) through said reference control node to identify possible control nodes interconnected, in a wired manner, with said reference control node and generating a second list (L2) of control nodes including said reference control node and possible control nodes interconnected, in a wired manner, with said reference control node;
e) selecting possible undiscovered control nodes of interest included in said second list (L2) of control nodes and exchanging said information packets (PCK) with the selected undiscovered control nodes of interest;
f) checking whether there are undiscovered control nodes of interest in said first list (L1) of control nodes;
g) if there are no undiscovered control nodes of interest in said first list (L1) of control nodes, terminate said method;
h) if a local wireless communication cannot be established with a control node of interest in said first list (L1) of control nodes at the step b) of said method or if there are undiscovered control nodes of interest in said first list (L1) of control nodes, executing a second path-finder procedure (400) to generate a third list (L3) of control nodes located within a local wireless communication range;
i) carrying out a determination procedure (300) to check whether a control node of said third list (L3) of control nodes is selectable as a reference control node;
j) if a control node of said third list (L3) of control nodes is selectable as a reference control node, repeating the previous steps by starting from step d) and by selecting said selectable control node as a reference control node; or
k) if no control node of said third list (L3) of control nodes is selectable as a reference control node, terminate said method.

2. Method, according to claim 1, **characterised in that** said determination procedure (300) comprises the following steps:
- i.1) checking whether there are undiscovered control nodes of interest included in said third list (L3) of control nodes;
- i.2) if there are undiscovered control nodes of interest included in said third list (L3) of control nodes, checking whether a wireless communication channel can be established with an undiscovered control node of interest included in said third list (L3);
- i.3) if a wireless communication channel can be established with an undiscovered control node of interest included in said third list (L3) of control nodes, determining that said undiscovered control node of interest is selectable as a reference control node;
- i.4) if there are no undiscovered control nodes of interest included in said third list (L3) of control nodes or if a wireless communication channel cannot be established with any undiscovered control node of interest included in said third list (L3) of control nodes, checking whether a wireless communication channel can be established with any control node included in said third list (L3) of control nodes;
- i.5) if a wireless communication channel can be established with a control node included in said third list (L3) of control nodes, determining that said control node is selectable as a reference control node);
- i.6) if a wireless communication channel cannot be established with any control node included in said third list (L3) of control nodes, determining that no control node included in said third list (L3) of control nodes is selectable as a reference control node.

3. Method, according to one or more of the previous claims, **characterised in that** said first path-finder procedure (200) includes executing a wired network discovery algorithm through said reference control node.

4. Method, according to one or more of the previous claims, **characterised in that** the step e) of said method (100) includes exchanging said information packets (PCK) with possible undiscovered control nodes of interest in a parallel manner.

5. Method, according to one or more of the claims from 1 to 4, **characterised in that** the step e) of said method includes exchanging said information packets (PCK) with possible undiscovered control nodes of interest in a sequential manner.

6. Method, according to one or more of the previous claims, **characterised in that** said second path-finder procedure (400) includes executing a wireless network scanning algorithm.

7. Method, according to one or more of the previous claims, **characterised in that** the termination of said method includes providing output data (RES) indicative of execution results of said method.

8. Method, according to one or more of the previous claims, **characterised in that** it comprises a step of updating a map (M) of the control nodes of said electric system.

9. Method, according to one or more of the previous claims, **characterised in that** said electric system is a photovoltaic plant, each control node being included in or operatively associated with a photovoltaic inverter of said photovoltaic plant.

10. A computer program including software instructions (SW) storable in a memory (53) and configured to carry out a method (100), according to one or more of the previous claims, when executed by data processing resources (510) of a computerised device.

11. A portable computerised device (50) comprising a control module (51) including data processing resources (510) and a local wireless communication port (55) adapted to interact with said control module to exchange information packets (PCK) with one or more external devices through a wireless communication at local level **characterised in that** said data processing resources (510) are capable of executing software instructions (SW) stored in a memory (53) and configured to carry out a method (100), according to one or more of the claims from 1 to 9.

## Patentansprüche

1. Verfahren (1) zur drahtlosen Kommunikation auf lokaler Ebene mit einem oder mehreren Steuerknoten eines elektrischen Systems, wobei die Steuerknoten in entsprechenden elektrischen oder elektronischen Vorrichtungen des elektrischen Systems enthalten oder diesen operativ zugeordnet sind und in der Lage sind, auf lokaler Ebene mit einer computerisierten Vorrichtung (50) zu kommunizieren, **dadurch gekennzeichnet, dass** es die folgenden Schritte umfasst:
a) Erzeugen einer ersten Liste (L1) von Steuerknoten, die zur Kommunikation beabsichtigte Steuerknoten von Interesse enthält, und Erzeugen eines Befehls, Informationspakete (PCK) mit den Steuerknoten von Interesse auszutauschen;
b) Prüfen, ob eine drahtlose Kommunikation auf lokaler Ebene mit einem Steuerknoten von Interesse, der in der ersten Liste (L1) von Steuerknoten enthalten ist, eingerichtet werden kann;
c) wenn eine drahtlose Kommunikation auf lokaler Ebene mit einem Steuerknoten von Interesse, der in der ersten Liste (L1) von Steuerknoten enthalten ist, eingerichtet werden kann, Auswählen des Steuerknotens von Interesse als einen Referenzsteuerknoten;
d) Ausführen eines ersten Vorgangs (200) zur Pfadsuche durch den Referenzsteuerknoten, um mögliche Steuerknoten zu identifizieren, die auf verdrahtete Weise mit dem Referenzsteuerknoten verbunden sind, und Erzeugen einer zweiten Liste (L2) von Steuerknoten, die den Referenzsteuerknoten und mögliche Steuerknoten, die auf verdrahtete Weise mit dem Referenzsteuerknoten verbunden sind, enthält;
e) Auswählen möglicher nicht entdeckter Steuerknoten von Interesse, die in der zweiten Liste (L2) von Steuerknoten enthalten sind, und Austauschen der Informationspakete (PCK) mit den ausgewählten nicht entdeckten Steuerknoten von Interesse;
f) Prüfen, ob nicht entdeckte Steuerknoten von Interesse in der ersten Liste (L1) von Steuerknoten vorhanden sind;
g) wenn keine nicht entdeckten Steuerknoten von Interesse in der ersten Liste (L1) von Steuerknoten vorhanden sind, Beenden des Verfahrens;
h) wenn eine lokale drahtlose Kommunikation mit einem Steuerknoten von Interesse in der ersten Liste (L1) von Steuerknoten im Schritt b) des Verfahrens nicht eingerichtet werden kann oder wenn nicht entdeckte Steuerknoten von Interesse in der ersten Liste (L1) von Steuerknoten vorhanden sind, Ausführen eines zweiten Vorgangs (400) zur Pfadsuche, um eine dritte Liste (L3) von Steuerknoten zu erzeugen, die sich innerhalb eines lokalen drahtlosen Kommunikationsbereichs befinden;
i) Durchführen eines Bestimmungsvorgangs (300), um zu prüfen, ob ein Steuerknoten der dritten Liste (L3) von Steuerknoten als ein Referenzsteuerknoten auswählbar ist;
j) wenn ein Steuerknoten der dritten Liste (L3) von Steuerknoten als ein Referenzsteuerknoten auswählbar ist, Wiederholen der vorhergehenden Schritte durch Starten bei Schritt d) und durch Auswählen des auswählbaren Steuerknotens als einen Referenzsteuerknoten; oder
k) wenn kein Steuerknoten der dritten Liste (L3) von Steuerknoten als Referenzsteuerknoten auswählbar ist, Beenden des Verfahrens.

2. Verfahren nach Anspruch 1, **dadurch gekennzeichnet, dass** der Bestimmungsvorgang (300) die folgenden Schritte umfasst:
i.1) Prüfen, ob nicht entdeckte Steuerknoten von Interesse in der dritten Liste (L3) von Steuerknoten enthalten sind;
i.2) wenn nicht entdeckte Steuerknoten von Interesse in der dritten Liste (L3) von Steuerknoten enthalten sind, Prüfen, ob ein drahtloser Kommunikationskanal mit einem nicht entdeckten Steuerknoten von Interesse, der in der dritten Liste (L3) enthalten ist, eingerichtet werden kann;
i.3) wenn ein drahtloser Kommunikationskanal mit einem nicht entdeckten Steuerknoten von Interesse, der in der dritten Liste (L3) von Steuerknoten enthalten ist, eingerichtet werden kann, Bestimmen, dass der nicht entdeckte Steuerknoten von Interesse als ein Referenzsteuerknoten wählbar ist;
i.4) wenn keine nicht entdeckten Steuerknoten von Interesse in der dritten Liste (L3) von Steuerknoten enthalten sind oder wenn kein drahtloser Kommunikationskanal mit einem nicht entdeckten Steuerknoten von Interesse, der in der dritten Liste (L3) von Steuerknoten enthalten ist, eingerichtet werden kann, Prüfen, ob ein drahtloser Kommunikationskanal mit einem Steuerknoten, der in der dritten Liste (L3) von Steuerknoten enthalten ist, eingerichtet werden kann;
i.5) wenn ein drahtloser Kommunikationskanal mit einem Steuerknoten, der in der dritten Liste (L3) von Steuerknoten enthalten ist, eingerichtet werden kann, Bestimmen, dass der Steuerknoten als Referenzsteuerknoten auswählbar ist;
i.6) wenn ein drahtloser Kommunikationskanal mit keinem in der dritten Liste (L3) von Steuerknoten enthaltenen Steuerknoten eingerichtet werden kann, Bestimmen, dass kein in der dritten Liste (L3) von Steuerknoten enthaltener Steuerknoten als Referenzsteuerknoten auswählbar ist.

3. Verfahren nach einem oder mehreren der vorhergehenden Ansprüche, **dadurch gekennzeichnet, dass** der erste Vorgang (200) zur Pfadsuche das Ausführen eines Algorithmus zur Erkennung eines verdrahteten Netzwerks durch den Referenzsteuerknoten enthält.

4. Verfahren nach einem oder mehreren der vorhergehenden Ansprüche, **dadurch gekennzeichnet, dass** der Schritt e) des Verfahrens (100) das Austauschen der Informationspakete (PCK) mit möglichen nicht entdeckten Steuerknoten von Interesse in einer parallelen Weise enthält.

5. Verfahren nach einem oder mehreren der Ansprüche 1 bis 4, **dadurch gekennzeichnet, dass** der Schritt e) des Verfahrens das Austauschen der Informationspakete (PCK) mit möglichen nicht entdeckten Steuerknoten von Interesse in einer sequenziellen Weise enthält.

6. Verfahren nach einem oder mehreren der vorhergehenden Ansprüche, **dadurch gekennzeichnet, dass** der zweite Vorgang (400) zur Pfadsuche das Ausführen eines Algorithmus zum Scannen eines drahtlosen Netzwerks enthält.

7. Verfahren nach einem oder mehreren der vorhergehenden Ansprüche, **dadurch gekennzeichnet, dass** die Beendigung des Verfahrens das Bereitstellen von Ausgabedaten (RES) enthält, die kennzeichnend für die Ausführungsergebnisse des Verfahrens sind.

8. Verfahren nach einem oder mehreren der vorhergehenden Ansprüche, **dadurch gekennzeichnet, dass** es einen Schritt des Aktualisierens eines Mappens (M) der Steuerknoten des elektrischen Systems umfasst.

9. Verfahren nach einem oder mehreren der vorhergehenden Ansprüche, **dadurch gekennzeichnet, dass** das elektrische System eine Fotovoltaikanlage ist, wobei jeder Steuerknoten in einem fotovoltaischen Umrichter der Fotovoltaikanlage enthalten ist oder diesem betreibbar zugeordnet ist.

10. Computerprogramm, das in einem Speicher (53) speicherbare Softwareanweisungen (SW) enthält und dazu ausgelegt ist, ein Verfahren (100) nach einem oder mehreren der vorhergehenden Ansprüche durchzuführen, wenn es von Datenverarbeitungsressourcen (510) einer rechnergestützten Vorrichtung ausgeführt wird.

11. Tragbare computergestützte Vorrichtung (50), umfassend ein Steuermodul (51), das Datenverarbeitungsressourcen (510) und einen lokalen drahtlosen Kommunikationsanschluss (55) enthält, der angepasst ist, um mit dem Steuermodul zu interagieren, um Informationspakete (PCK) mit einem oder mehreren externen Vorrichtungen über eine drahtlose Kommunikation auf lokaler Ebene auszutauschen, **dadurch gekennzeichnet, dass** die Datenverarbeitungsressourcen (510) in der Lage sind, Softwareanweisungen (SW) auszuführen, die in einem Speicher (53) gespeichert sind, und dazu ausgelegt sind, ein Verfahren (100) nach einem oder mehreren der Ansprüche 1 bis 9 durchzuführen.

## Revendications

1. Procédé (1) de communication sans fil au niveau local avec un ou plusieurs nœuds de commande d'un système électrique, lesdits nœuds de commande étant inclus dans, ou associés de manière opérationnelle à, des appareils électriques ou électroniques correspondants dudit système électrique et étant capables de communiquer au niveau local avec un dispositif informatisé (50), le procédé étant **caractérisé en ce qu'**il comprend les étapes suivantes :
a) générer une première liste (L1) de nœuds de commande comprenant des nœuds de commande d'intérêt destinés à la communication et générer une commande pour échanger des paquets d'informations (PCK) avec lesdits nœuds de commande d'intérêt ;
b) vérifier si une communication sans fil au niveau local peut être établie avec un nœud de commande d'intérêt inclus dans ladite première liste (L1) de nœuds de commande ;
c) si une communication sans fil au niveau local peut être établie avec un nœudde commande d'intérêt inclus dans ladite première liste (L1) de nœuds de commande, sélectionner ledit nœudde commande d'intérêt comme nœudde commande de référence ;
d) exécuter une première procédure de recherche de chemin (200) par l'intermédiaire dudit nœud de commande de référence pour identifier d'éventuels nœuds de commande interconnectés, d'une manière câblée, avec ledit nœud de commande de référence, et générer une deuxième liste (L2) de nœuds de commande comprenant ledit nœud de commande de référence et des éventuels nœuds de commande interconnectés, d'une manière câblée, avec ledit nœud de commande de référence ;
e) sélectionner d'éventuels nœuds de commande non découverts d'intérêt inclus dans ladite deuxième liste (L2) de nœuds de commande, et échanger lesdits paquets d'informations (PCK) avec les nœuds de commande non découverts d'intérêt sélectionnés ;
f) vérifier s'il existe des nœuds de commande non découverts d'intérêt dans ladite première liste (L1) de nœuds de commande ;
g) s'il n'y a pas de nœuds de commande non découverts d'intérêt dans ladite première liste (L1) de nœuds de commande, terminer ledit procédé ;
h) si une communication sans fil locale ne peut pas être établie avec un nœudde commande d'intérêt dans ladite première liste (L1) de nœuds de commande à l'étape b) dudit procédé ou s'il y a des nœuds de commande d'intérêt non découverts dans ladite première liste (L1) de nœuds de commande, exécuter une deuxième procédure de recherche de chemin (400) pour générer une troisième liste (L3) de nœuds de commande situés dans les limites d'une portée de communication sans fil locale ;
i) exécuter une procédure de détermination (300) pour vérifier si un nœud de commande de ladite troisième liste (L3) de nœuds de commande peut être sélectionné comme nœud de commande de référence ;
j) si un nœud de commande de ladite troisième liste (L3) de nœuds de commande peut être sélectionné comme nœud de commande de référence, répéter les étapes précédentes en commençant par l'étape d) et en sélectionnant ledit nœud de commande pouvant être sélectionné comme nœud de commande de référence ; ou
k) si aucun nœud de commande de ladite troisième liste (L3) de nœuds de commande ne peut être sélectionné comme nœud de commande de référence, terminer ledit procédé.

2. Procédé selon la revendication 1, **caractérisé en ce que** ladite procédure de détermination (300) comprend les étapes suivantes :
- i.1) vérifier s'il y a des nœuds de commande non découverts d'intérêt inclus dans ladite troisième liste (L3) de nœuds de commande ;
- i.2) s'il y a des nœuds de commande non découverts d'intérêt inclus dans ladite troisième liste (L3) de nœuds de commande, vérifier si un canal de communication sans fil peut être établi avec un nœud de commande non découvert d'intérêt inclus dans ladite troisième liste (L3) ;
- i.3) si un canal de communication sans fil peut être établi avec un nœud de commande non découvert d'intérêt inclus dans ladite troisième liste (L3) de nœuds de commande, déterminer que ledit nœud de commande non découvert d'intérêt peut être sélectionné comme nœud de commande de référence ;
- i.4) s'il n'y a pas de nœuds de commande non découverts d'intérêt inclus dans ladite troisième liste (L3) de nœuds de commande ou si un canal de communication sans fil ne peut pas être établi avec un quelconque nœud de commande non découvert d'intérêt inclus dans ladite troisième liste (L3) de nœuds de commande, vérifier si un canal de communication sans fil peut être établi avec un nœud de commande quelconque inclus dans ladite troisième liste (L3) de nœuds de commande ;
- i.5) si un canal de communication sans fil peut être établi avec un nœud de commande inclus dans ladite troisième liste (L3) de nœuds de commande, déterminer que ledit nœud de commande peut être sélectionné comme nœud de commande de référence) ;
- i.6) si un canal de communication sans fil ne peut pas être établi avec un quelconque nœud de commande inclus dans ladite troisième liste (L3) de nœuds de commande, déterminer qu'aucun nœud de commande inclus dans ladite troisième liste (L3) de nœuds de commande ne peut être sélectionné comme nœud de commande de référence.

3. Procédé selon une ou plusieurs des revendications précédentes, **caractérisé en ce que** ladite première procédure de recherche de chemin (200) comprend d'exécuter un algorithme de découverte de réseau câblé par l'intermédiaire dudit nœud de commande de référence.

4. Procédé selon une ou plusieurs des revendications précédentes, **caractérisé en ce que** l'étape e) dudit procédé (100) comprend d'échanger lesdits paquets d'informations (PCK) avec d'éventuels nœuds de commande non découverts d'intérêt de manière parallèle.

5. Procédé selon une ou plusieurs des revendications de 1 à 4, **caractérisé en ce que** l'étape e) dudit procédé comprend d'échanger lesdits paquets d'information (PCK) avec d'éventuels nœuds de commande non découverts d'intérêt de manière séquentielle.

6. Procédé selon une ou plusieurs des revendications précédentes, **caractérisé en ce que** ladite deuxième procédure de recherche de chemin (400) comprend d'exécuter un algorithme de balayage de réseau sans fil.

7. Procédé selon une ou plusieurs des revendications précédentes, **caractérisé en ce que** la fin dudit procédé comprend de fournir des données de sortie (RES) indicatives des résultats d'exécution dudit procédé.

8. Procédé selon une ou plusieurs des revendications précédentes, **caractérisé en ce qu'**il comprend une étape de mise à jour d'une carte (M) des nœuds de commande dudit système électrique.

9. Procédé selon une ou plusieurs des revendications précédentes, **caractérisé en ce que** ledit système électrique est une installation photovoltaïque, chaque nœudde commande étant inclus dans, ou associé de manière opérationnelle à, un onduleur photovoltaïque de ladite installation photovoltaïque.

10. Programme informatique comprenant des instructions logicielles (SW) stockables dans une mémoire (53) et configurées pour mettre en œuvre un procédé (100), selon une ou plusieurs des revendications précédentes, lorsqu'elles sont exécutées par des ressources de traitement de données (510) d'un dispositif informatisé.

11. Dispositif informatisé portable (50) comprenant un module de commande (51) incluant des ressources de traitement de données (510) et un port de communication locale sans fil (55) adapté pour interagir avec ledit module de commande pour échanger des paquets d'informations (PCK) avec un ou plusieurs dispositifs externes par l'intermédiaire d'une communication sans fil au niveau local, le dispositif étant **caractérisé en ce que** lesdites ressources de traitement de données (510) sont capables d'exécuter des instructions logicielles (SW) stockées dans une mémoire (53) et configurées pour mettre en œuvre un procédé (100) selon une ou plusieurs des revendications de 1 à 9.
